# EUROPEAN PATENT APPLICATION

(11) **EP 2 479 984 A1**
(43) Date of publication of application: **25.07.2012**
(21) Application number: 11305054.6
(22) Date of filing: 19.01.2011
(51) Int. Cl.: H04N 5/60, H04J 3/06, H04N 5/00, H04N 7/173, H04N 7/24, H04N 7/52

(54) **Device and method for synchronizing content received from different sources**

(71) Applicant: Thomson Licensing, 92130 Issy-les-Moulineaux (FR)
(72) Inventor: Legallais, Yvon, 35576, Cesson-Sévigné (FR); Clarenc, Pierre, 35576, Cesson-Sévigné (FR); Gilberton, Philippe, 35576, Cesson-Sévigné (FR)
(74) Representative: Huchet, Anne

(57) **Abstract**

The present invention concerns a first device and a method at the first device for synchronizing a streaming content received from a server (1) to an audio-video program rendered by a second device (4), said method comprising, at said first device, the steps of assessing the duration for receiving, from said server, streaming content requested from said first device, obtaining (S4) a program offset value from the second device, said program offset corresponding to the time elapsed from the beginning of the audio-video program, sending (S5) a request to the server to receive the streaming content at an expected time corresponding to said program offset plus said duration, receiving and decoding said streaming content and rendering (S6) said streaming content.

## Description

### FIELD OF THE INVENTION

The present invention relates generally to interactivity and in particular to a method for synchronizing an interactive content to broadcasted content.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In a broadcast television system, audio and video components are usually transmitted simultaneously, synchronized in a same stream. They are also generally provided by a unique multimedia source, for example a content provider, transported with a unique transport protocol. They are also delivered by a unique rendering terminal. A unique decoder usually decodes the encoded stream and transmits the decoded stream to a television. The television displays the video and the audio content.

With the emergence of the Internet network as well as the mobile networks, new multimedia applications have appeared where the multimedia sources and the transport protocols may be different for the audio and video streams. Interactive applications may also come from a source different from the audio-video source. An example of such multimedia applications can be seen in an hybrid network comprising a broadcast delivery system combined with a broadband delivery system. An audio-video stream is broadcasted on the broadcast system and received at a terminal. The terminal renders the video content with the audio language transported in the audio stream. A second audio stream is provided to the terminal through a broadband system.

This second audio stream transports audio content in a second language different from the one that is broadcasted. The terminal may then display the video in combination with the second language. This requires that the second audio component is synchronized to the video content. More generally, it should be ensured that the rendering between the audio, the video and the interactive application is synchronized.

The French patent application number 1058421, filed on October 15, 2010, discloses a solution for synchronizing content transported in a hybrid network. A synchronization information is added to the content transported over the broadcast and the broadband networks. A receiver uses that information to synchronize the content received over the broadband network to the content received over the broadcast network. This solution requires the transport and the management of additional synchronization content.

### SUMMARY OF THE INVENTION

The present invention attempts to remedy at least some of the concerns connected with synchronization in the prior art, by providing a system that seamlessly synchronizes content received from different sources.

To this end, the invention relates to a method at a first device for synchronizing a streaming content received from a server to an audio-video program rendered by a second device, the method comprising, at the first device, the steps of assessing the duration for receiving, from the server, streaming content requested from the first device obtaining a program offset value from the second device, the program offset corresponding to the time elapsed from the beginning of the audio-video program sending a request to the server to receive the streaming content at an expected time corresponding to the program offset plus the duration receiving and decoding the streaming content and rendering the streaming content.

According to the invention the streaming content rendered at the first device is synchronized to the audio-video program rendered at the second device. In other words, the streaming content is rendered at a time that matches the time at which the audio-video is rendered. The synchronization is performed with the knowledge of the content offset of the audio-video program and the duration assessed at the device. According to the synchronization, the expected time corresponds to the time at which the audio-video is rendered at the audio-video device. This is transparent for the end user of the first device, and the synchronization is easily and rapidly performed.

The invention also relates to a method at a device for synchronizing a streaming content received from a server to an audio-video program rendered by the device, the audio-video program having a program offset value corresponding to the time elapsed from the beginning of the audio-video program, the method comprising, at the device, the steps of assessing the duration for receiving, from the server, streaming content requested from the device sending a second request to the server to receive the streaming content at an expected time corresponding to the program offset plus the duration, receiving and decoding the streaming content and rendering the streaming content.

According to an embodiment the step of assessing comprises the steps of sending a request to the server, at a first point in time, to receive a streaming content receiving and decoding the streaming content extracting a second point in time corresponding to the moment when the streaming content is available to be rendered computing a time interval value, being the difference between the first point in time and the second point in time.

According to an embodiment the step of obtaining the program offset value comprises the steps of sending a request to the second device to obtain the program offset value and receiving a response from the second device with the program offset value.

According to an embodiment the request to receive a streaming content is a RTSP PLAY request.

Another object of the invention is a computing device comprising an interface for connecting to a server, a player for rendering streaming content received from the server, a synchronizer for synchronizing the streaming content to content rendered in a second device with the method according to the method at a first device for synchronizing the streaming content received from the server to an audio-video program rendered by the second device.

Another object of the invention is a decoder, comprising a first interface for receiving a first streaming content, a second interface for receiving a second streaming content from a server and a synchronizer for synchronizing the second content to the first streaming content with the method at a device for synchronizing a streaming content received from the server to the audio-video program rendered by the device.

According to an embodiment of the invention, the first interface being a broadcast interface and the second interface being a broadband interface

Another object of the invention is a computer program product comprising program code instructions for executing the steps of the method according to the invention, when that program is executed on a computer. By "computer program product", it is meant a computer program support, which may consist not only in a storing space containing the program, such as a computer memory, but also in a signal, such as an electrical or optical signal.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 is a block diagram of a system compliant with the embodiments;
- Figure 2 is a block diagram of a local device according to the embodiments;
- Figure 3 is a block diagram of a set-top box according to the embodiments;
- Figure 4 is a flow chart of a method according to the embodiments.

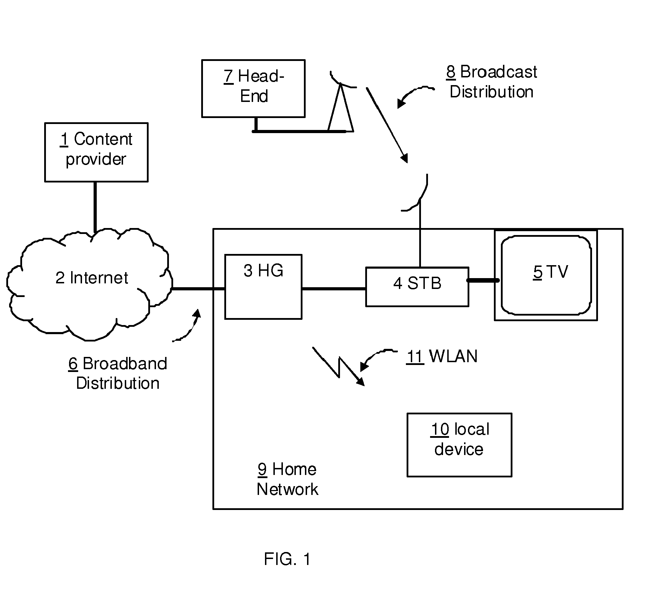

In the Figures 1, 2 and 3, the represented blocks are purely functional entities, which do not necessarily correspond to physically separate entities. Namely, they could be developed in the form of hardware or software, or be implemented in one or several integrated circuits.

### DETAILED DESCRIPTION OF PREFERRED EMBODIMENTS

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

The system according to the embodiment is illustrated in figure 1. A residential network, the home network 9, comprises a home gateway 3 to access the Internet 2 through a broadband connection 6. It provides a broadband Internet access to the home network. The broadband access may be of any well known technologies such as DSL, cable or satellite. The home network comprises a set-top box 4 adapted to receive audio-video content from a server, the head-end 7, through a broadcast distribution network 8. The broadcast distribution network may be of any type.

The set-top box 4, noted STB, receives encoded audio-video content, decodes the content, and sends the decoded content to a television 5. The STB is connected to the home gateway through a LAN interface such as Ethernet. It enables the STB to receive content from a content provider 1 located on the Internet 2, as further detailed hereinafter.

The home network also comprises at least one local device 10 connected to the home gateway through a wireless LAN network 11, noted WLAN. The WLAN is of IEEE802.11 technology. Of course it could be based on any wireless LAN technology. Alternatively the local device could be connected to the gateway through a wired technology such as the Ethernet. The local device can then receive content from the content provider located on the Internet. Alternatively, the local device could be a mobile device or cellular device that is connected to the content provider through a third generation cellular network. More generally the local device may be any kind of computing device adapted to receive and render a streaming content.

The following example illustrates a first embodiment. Several users watch a program on television in a first language. The program is received from the broadcast network. A banner appears on the television screen to indicate that another language is available for the program. One of the users is interested in that language. He connects his headphones to his personal device. The personal device is connected to the Internet. The end user launches an application on the personal device to receive the second audio stream at his personal device from the content provider. The synchronization with the main content displayed on television is performed according to the mechanism of the embodiment as detailed hereinafter.

In another example, corresponding to a second embodiment, all the users are interested in watching the program in the other language. The second audio stream is received at the television and the television renders that second language instead of the language received in the broadcasted audio stream. In this embodiment, the application is launched in the STB instead of the personal device.

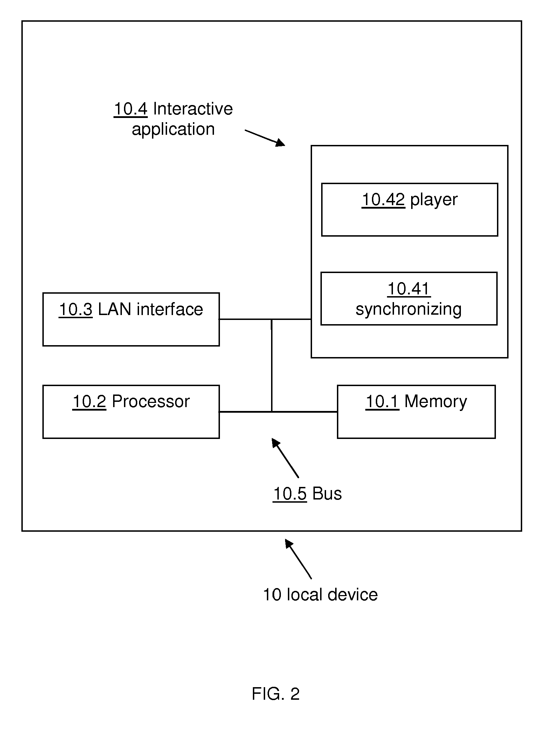

The personal device 10, corresponding to the first embodiment, is illustrated in figure 2. It comprises a memory 10.1 for storing data and applications, a processor 10.2 for running the applications, and a LAN interface 10.3. It also comprises an interactive application 10.4. The interactive application comprises a synchronizing module 10.41 to synchronize to the STB, and a player 10.42 adapted to receive content from the content provider and to render the content. This is further detailed hereinafter.

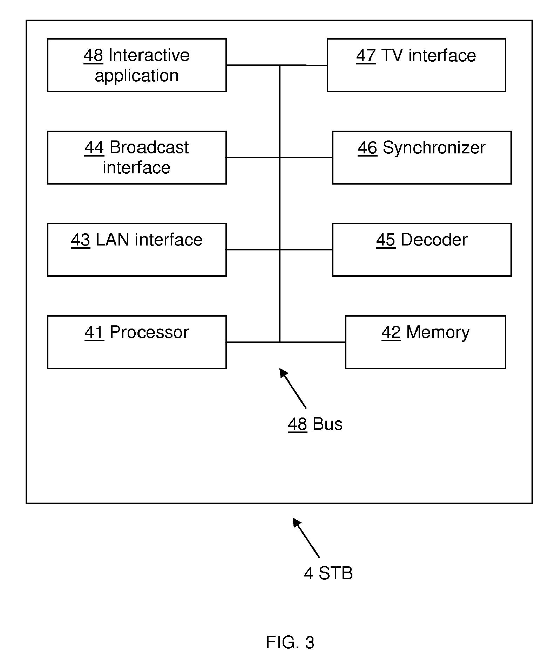

The STB according to the second embodiment is illustrated in the figure 3. It comprises the well-known modules of a STB.

It comprises a broadcast interface 44 to receive broadcasted content, and a LAN interface 43, which is an interface of the Ethernet type. It comprises a central processor 41. The decoder 45 decodes the content received from the broadcast interface so that is can be sent to a screen by means of the audio-video interface 47. The broadcasted content contains an indication of the program offset, which corresponds to the time elapsed since the beginning of the program currently broadcasted.

In addition the STB comprises a synchronizing module 46 that is adapted to synchronize to the local device as indicated hereinafter. In particular the synchronizing module is adapted to obtain the URL of the location where the audio video service corresponding to the broadcasted program is accessible. The synchronizing module makes this URL available in a memory 42 so that it can be read by the device. The synchronizing module is also adapted to obtain and make available the program offset to the device. The STB also comprises an interactive application 48 that corresponds to the interactive application of the local device 10 as described hereinabove.

The STB according to the first embodiment corresponds to the STB according to the second embodiment without the interactive application module 48.

In the first embodiment, the STB is considered as the master device as regards to the personal device; it maintains a time reference of the video content displayed on the television. The time reference is accessible to the personal device.

The method for receiving complementary content is now described. A program is received from the broadcast distribution system at the STB. It is decoded and displayed on the television screen in a manner well know per se to the skilled in the art. An audio-video service, also called extended content, associated to that program is available from a content provider on the Internet.

The location where to access that audio video service is indicated in a Uniform Resource Location, URL. It is provided to the STB together with the broadcast content. It is embedded in the broadcast stream. This is transported in the Service Information of a DVB stream, specified in the ETSI EN 300 468 standard. The Event Information Table defined in section 5.2.4 provides information in chronological order regarding the events contained within each service and contains a descriptor called linkage descriptor which presents additional information related to a service. Thus the main device is able to receive a list of Real Time Streaming Protocol RTSP URL related to TV program. For instance, those URLs can be the link audio files of the audio of a film in different languages.

Alternatively it can be indicated to the STB over the broadband connection. A request to a default web server provides the URL of a streaming server to which the RTSP request will be addressed. This default web server is updated according to the current broadcast program for one or several channels.

The URL is displayed on the television through a banner commonly used for indicating any information in a digital television system. Alternatively, the banner only indicates that an audio video service corresponding to the broadcast content is available. If an end user is interested in the extended content, he launches the interactive application on his personal device. The interactive application is adapted to download the extended content from the server and to synchronize that content with the content displayed on the television screen.

The URL of the server and the temporal reference of the currently displayed content are available at the STB. To synchronize the content the interactive application obtains them from the STB.

The interactive application detects that a STB is present in the home network. This is based on a discovery mechanism such as defined in Universal Plug and Play network protocol UPnP. It then collects information through request/response messages exchanged with the STB. These messages are of two different types. A first message is a service description indicating the type of auxiliary content available (audio, video or any kind of interactive content), and the URL for retrieving this content. A second message is the timestamp of the video currently rendered on the television. This request/response exchange occurs a first time to launch the auxiliary content rendering and then periodically so that the local device measures the clock drift with the STB and compensates this clock drift.

The interactive application then requests the content to the server as follows, using the Real Time Streaming Protocol, RTSP, as specified in the RFC 2326. It sends a RTSP DESCRIBE to the server, according to section 10.2 of the RFC2326, with a Uniform Resource identifier, URI, such as rtsp://server.example.com/fizzle/foo RTSP/1.0. According to the RFC 2326, the server responds with all media initialization resource like audio-video format or transport protocol.

With these parameters, the interactive application is able to send a RTSP SETUP request to the server, according to section 10.4 of the RFC 2326. It indicates the transport mechanism to be used for the streamed media; in particular the protocol and the destination port numbers on which the client has chosen to receive media data and control information. In the embodiment, the protocols are the real time transport protocol, RTP, and the real time transport control protocol, RTCP, according to the RFC3550. If it is able to serve the client, the server indicates in its response a session identifier and the source port numbers it will use.

The following example that illustrates the request / response is extracted from the RFC2326, section 10.4:
C―>S: SETUP rtsp://example.com/foo/bar/baz.rm RTSP/1.0
CSeq: 302
Transport: RTP/AVP;unicast;client_port=4588-4589
S―>C: RTSP/1.0 200 OK
CSeq: 302
Date: 23 Jan 1997 15:35:06 GMT
Session: 47112344
Transport: RTP/AVP;unicast;
client_port=4588-4589;server_port=6256-6257

A first RTSP PLAY request, according to section 10.5 of the RFC 2326, launches the streaming. In the following "t" represents a time and "T" a duration. The range parameter in this request specifies the offset in time in the streamed file. The content corresponding to this offset is rendered synchronized with the audio-video on the television.

The offset is the sum of the following parameters:
- T0 : the current program time offset provided by the STB,
- T1 : the delay between the transmission of the program offset value by the STB and the reception by the interactive application,
- T2 : the time between the transmission of the first RTSP PLAY request by the interactive application and the reception by the server,
- T3 : the time between the reception of the first RTSP PLAY request by the server and the transmission of the first RTP packet of the streaming,
- T4 : the time between transmission of the first RTP packet and the rendering of its content.

T1 is evaluated by measuring the propagation time between the STB and the interactive application. In particular it is estimated by measuring the time of transmission of a message to the STB and the time of reception of the response from the STB; the propagation time delay between the two devices is half of this measurement. It is assumed hereinafter that T1 is negligible as regards to the other delays. Of course if T1 would not be negligible it would be taken into account for computing the offset.
T2 depends on the distance and the network conditions between the home network where the local device is located and the server. Consequently, it cannot be known by the service provider and it is not included in the description of the service in the broadcast program.
T3 is a feature of the server. It is unknown to the interactive application.
T4 depends on the distance and the network parameters like T2, and also on the local device architecture, in particular on the reception buffer size.

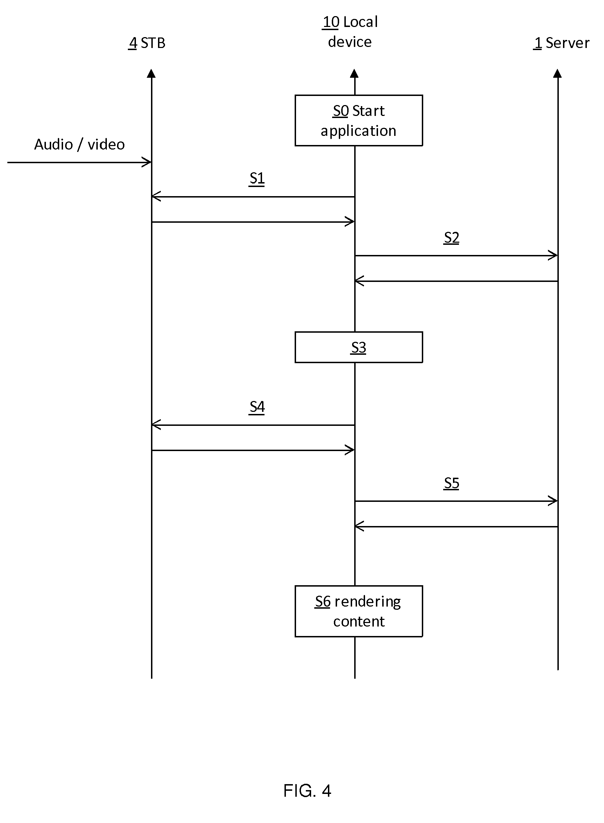

The mechanism described herein below, and illustrated in figure 4, aims at guaranteeing the rendering of the right content at the moment corresponding to T0+T1 +T2+T3+T4 whatever its value.

The interactive application is started on the local device at step S0. At step S1, the local device receives the T0 indication from the STB. At step S2, the interactive application transmits a first RTSP PLAY request with a range value of T0 + T_{arbitrary} at time t_{first} play.

T_{arbitrary} is an arbitrary value which is a few seconds. This value is an estimation of what could be expected for the sum of (T2+T3+T4). The minimum value is then the round-trip time to the server which can be measured by using the timestamps of the request and response RTSP packets header. This is indicated in section 12.38 of the RFC 2326.

In response to this first RTSP PLAY request, the streaming is started by the server to the local device. The interactive application is receiving and decoding the audio-video content. This content is not necessarily rendered as it is not synchronized to the audio video content. It is processed by the synchronizer as follows. When playing the data of the first RTP packet, the synchronizer extracts the current time: t_{first} rendering, at step S3. The T_{offset} corresponds to t_{first} rendering - t_{first} play and is equal to T2 +T3 +T4. T_{offset} corresponds to the time elapsed between the first RTSP PLAY request and the beginning of the presentation of the requested stream. Thanks to the first RTSP PLAY request, the T_{offset} value is determined, and it can then be taken into account to calculate a range value for a second RTSP PLAY request.

Later, at step S4, the local device obtains the program offset from the STB. And, at step S5, it sends a second RTSP PLAY request at time t, which corresponds to a program offset in the audio-video file of T0i, the range parameter of the second RTSP PLAY is set to T0i + T_{offset}. On reception of the content, the local device decodes and renders the content, at step S6. The content is rendered at an offset time that corresponds to T0i + T_{offset}. This corresponds to the current program offset of the audio-video program. Content rendering are then synchronized.

When presenting the content, the interactive application measures the difference between the expected presentation time and the effective presentation time (T_{offset}). If this difference is too important, another RTSP PLAY request is sent with a range calculated with the newly measured T_{offset}.

The local device receives the program offset T0i from the STB at step S4. It may also compute the T0i from the T0 previously obtained, without requesting it from the STB. On reception of a T0 from the STB, the local device may start a timer to estimate the current program offset from the T0.

More generally, the local device may send the first RTSP PLAY at step S2 without having received the T0 indication. This T0 indication is not necessary for computing the offset in step S3. The RTSP PLAY may be sent with any arbitrary T indication that does not necessary correspond to the current program offset. The purpose of the first RTSP PLAY is to evaluate the offset value; which is independent on the current program offset. The local device simply needs to obtain the current program offset from the STB before sending the second RTSP PLAY request.

According to the RFC2326, the RTSP PLAY response includes a range value indicating the range of time that is actually played by the server (Tp). The following example is extracted from the RFC2326:
C―>S: PLAY rtsp://audio.example.com/twister.en RTSP/1.0
CSeq: 833
Session: 12345678
Range: smpte= Tr
S―>C: RTSP/1.0 200 OK
CSeq: 833
Date: 23 Jan 1997 15:35:06 GMT
Range: smpte=Tp

Particularly, it can be used by a video server to start a streaming by key frame, i.e. which can be directly displayed by the client. For example a key frame may be an I frame in a Group of Picture configuration according the MPEG2-TS standards. Depending on the implementation, the server can start streaming, for instance, by the first key frame which of range offset is after the requested range.

If this range is different than the requested one, the difference ΔT= Tp - Tr is added to T_{offset}.

If the video server delivers the streaming from the requested range without taking into account if it corresponds to a key frame or not, the interactive application computes itself the range corresponding to the first displayed frame which can be a key frame in any case. It means that the sum of presentation time of each non-key frame received before the first rendered frame shall be added to the T_{offset} value.

The RTSP PLAY command can also be used to control the server to get the streaming in an accelerated mode. The requested speed is specified in the SPEED parameter as a decimal ratio, e.g., a value of 2.0 indicates that data is to be delivered twice as fast as normal. This corresponds to the section 12.35 in RFC 2326.
The reception buffer of the local device can then be optimized and be managed in exploiting this extra time to perform a streaming reparation mechanism. A typical streaming reparation mechanism would be based on detecting among all RTP packets stored in the reception buffer the missing ones and accordingly send relevant reparation requests through HTTP or RTSP.

Once synchronized, the local device periodically requests the STB for the current offset of content it is playing. Thanks to this information, the local device can check if it is still synchronized with the STB.

In case of synchronization lost, the interactive application sends another RTSP PLAY request to the server with an adjusted SPEED parameter in order to smoothly synchronize. This SPEED parameter value is sufficiently lower or upper than the nominal one to quickly compensate the drift but not too much in order to keep an acceptable pitch. When the synchronization is achieved again, the interactive application sends a RTSP PLAY request with a SPEED parameter computed to compensate future drift.

The newly SPEED parameter value requested by the local device is (t_{aux current} - tᵢₙᵢₜ) (tₘₐᵢₙ__{current} - tᵢₙᵢₜ), where:
tᵢₙᵢₜ: begin time of the interactive application playback (since the last synchronization state check)
tₐᵤₓ current: current offset displayed by the local device tₘₐᵢₙ current: current offset displayed by the STB

In the second embodiment, the interactive application is located in the STB. The interactive application obtains the URL and the program offset directly from the synchronizing module located in the STB. The audio-video service is then displayed on the television. That second embodiment is also illustrated in figure 4, where the local device is collocated with the STB.

In the embodiments, an interactive application synchronizes to the broadcast content received at a set-top box. In a various embodiment, the interactive application synchronizes to content rendered in a device, wherein the content is not received from a broadcast network, but stored in a memory in the device or in another device in the local network. In that case, the content comprises an indication of a content offset that is accessible to the interactive application.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. Method at a first device (10) for synchronizing a streaming content received from a server (1) to an audio-video program rendered by a second device (4), said method comprising, at said first device, the steps of:
- assessing the duration for receiving, from said server, streaming content requested from said first device;
- obtaining (S4) a program offset value from the second device, said program offset corresponding to the time elapsed from the beginning of the audio-video program;
- sending (S5) a request to the server to receive the streaming content at an expected time corresponding to said program offset plus said duration;
- receiving and decoding said streaming content; and
- rendering (S6) said streaming content.

2. Method at a device (4) for synchronizing a streaming content received from a server (1) to an audio-video program rendered by said device, said audio-video program having a program offset value corresponding to the time elapsed from the beginning of the audio-video program, said method comprising, at said device, the steps of:
- assessing the duration for receiving, from said server, streaming content requested from said device;
- sending (S5) a second request to the server to receive the streaming content at an expected time corresponding to said program offset plus said duration;
- receiving and decoding said streaming content; and
- rendering said streaming content.

3. Method according to claim 1 or 2, the step of assessing comprising the steps of:
- sending (S2) a request to the server, at a first point in time, to receive a streaming content;
- receiving and decoding the streaming content;
- extracting (S3) a second point in time corresponding to the moment when said streaming content is available to be rendered;
- computing a time interval value, being the difference between the first point in time and the second point in time.

4. Method according to claim 1, the step of obtaining the program offset value comprising the steps of:
- sending a request to the second device to obtain the program offset value; and
- receiving a response from said second device with the program offset value.

5. Method according to any one of the preceding claims, said request to receive a streaming content being a RTSP PLAY request.

6. Computing device (10) comprising:
- an interface (10.3) for connecting to a server;
- a player (10.42) for rendering streaming content received from the server;
- a synchronizer (10.41) for synchronizing said streaming content to content rendered in a second device, with the method according to claim 1.

7. A decoder, comprising:
- a first interface (44) for receiving a first streaming content;
- a second interface (43) for receiving a second streaming content from a server; and
- a synchronizer (46) for synchronizing said second content to said first streaming content, with the method according to claim 2.

8. A decoder according to claim 7, said first interface being a broadcast interface and said second interface being a broadband interface.

9. Computer program product, **characterized in that** it comprises program code instructions for executing the steps of the method according to claims 1 to 5 when said program is executed on a computer.
